# EUROPEAN PATENT SPECIFICATION

(11) **EP 4 524 408 B1**
(45) Date of publication and mention of the grant of the patent: **18.03.2026**
(21) Application number: 24201040.3
(22) Date of filing: 18.09.2024
(51) Int. Cl.: F16B 21/02, A63H 33/10, A63H 27/00, F16B 5/10

(54) **MODULAR CONSTRUCTION SYSTEM FOR QUICK AND REVERSIBLE ASSEMBLY OF MODULAR VEHICLES**
MODULARES KONSTRUKTIONSSYSTEM ZUM SCHNELLEN UND UMKEHRBAREN ZUSAMMENBAU MODULARER FAHRZEUGE
SYSTÈME DE CONSTRUCTION MODULAIRE POUR UN ASSEMBLAGE RAPIDE ET RÉVERSIBLE DE VÉHICULES MODULAIRES

(30) Priority: 18.09.2023 PT 2023118925; 17.09.2024 PT 2024119704
(43) Date of publication of application: 19.03.2025
(73) Proprietor: António Cameira Eiras, Unipessoal Lda, 1250-247 Lisboa (PT)
(72) Inventor: CAMEIRA SILVA EIRAS, ANTONIO MANUEL, 1250-247 Lisboa (PT)
(74) Representative: Pereira da Cruz, Joao

(56) References cited:
- WO-A1-2012/104685
- WO-A1-2017/090846
- WO-A1-2022/012804
- US-A1- 2007 123 137
- US-A1- 2020 094 422
- US-A1- 2021 088 061

## Description

### FIELD OF THE INVENTION

The present invention refers to the assembly of modular vehicles, in a temporary or permanent manner.

### PRIOR ART

The traditional way of building aircraft, vehicles and boats, as in any mechanical project, involves defining the model to be built based on functionality, dimensions, design, costs, target market and other objectives, after which the overall project is developed, with the definition of each of the components and parts to be used and the manufacturing, assembly and finalization processes, for delivery to the customer.

According to this traditional methodology, each final vehicle is conceived, designed and manufactured as a functional and indivisible whole. Maintenance operations, whether routine or for repair, are, naturally, foreseen and are facilitated by an adequate and functional design.

In this classic type of design and manufacturing, each vehicle is designed without foreseeing the need for its total or partial disassembly, whether during its functional process, or for packaging or transport, and maintenance or repair operations are usually time-consuming, due to the complexity of the unitary structure, with limited sharing of components with other models.

In addition, the total or partial disassembly of a vehicle requires that the fastening mechanisms used to connect the different components of the vehicle body to be reversible, while providing an effective and long-lasting fixation. Most commonly used mechanical fastening devices are screws. The use of screws, or sets of screws and nuts properly selected and suitable for a given project, allows for relatively quick, effective and long-lasting fixation. However, this type of solution is not ideal for repetitive assembling and disassembling of the vehicle, due to the rapid deterioration of the support material in each repetition of the fastening and/or removal process, and also the time it takes to fasten and/or remove these devices. The document WO2022/012804A1 shows a modular vehicle construction system of the prior art.

The proposed invention innovatively provides a solution for such problem.

### SUMMARY OF THE INVENTION

It is an object of the present invention a modular vehicle construction system comprising a central module and at least one peripheral module, being the central module and the at least one peripheral module connected to each other by a reversible fastening mechanism to assemble a vehicle body, wherein the reversible fastening mechanism comprises an internal element (15), an external element (16) and a key (17).

The internal element (15) of the reversible fastening mechanism comprises a central cavity (24) having at least one internal stationary stop (25) positioned within said cavity; the external element (16) of the reversible fastening mechanism comprises a central hole and at least one external stationary stop (27) positioned within said central hole; and the key (17) of the reversible fastening mechanism comprises an internal portion and an external portion, having said internal portion at least one internal stop (32) and at least one intermediate stop (33), in which the internal element (15) is positioned adjacently to the external element (16) so that the central hole of the external element (16) is aligned with the central cavity (24) of the internal element (15).

Moreover, the internal portion of the key (17) is configured to be inserted through the central hole of the external element (16) and through the central cavity (24) of the internal element (15); the external portion of the key (17) is configured to allow the rotation movement of the key (17) so that the at least one internal stop (32) of the key (17) engages the at least one internal stationary stop (25) of the internal element (15) and at least one intermediate stop (33) of the key (17) engages the at least one external stationary stop (27) of the external element (16).

Furthermore, the central module comprises at least one first connection surface (6) adapted to engage one second connection surface (6) of the at least one peripheral module, in which the at least one first connection surface (6) comprises at least one selected from the group: internal element (15), external element (16) and combinations thereof; and the at least one peripheral module comprises at least one second connection surface (6) adapted to engage one first connection surface (6) of the central module, in which the at least one second connection surface (6) comprises at least one selected from the group: internal element (15), external element (16) and combinations thereof.

In an advantageous aspect of the present invention, the central module and one or more peripheral modules are connected to each other at the first and second connection surfaces (6) of each module, which are adapted to engage with each other. The engagement of the first and second connection surfaces (6) can be attained by sliding one connection surface (6) onto the other, or by fitting fastening elements comprised in the peripheral modules and in the central module so that the first connection surface (6) and the second connection surface (6) are adjacently positioned to one another to allow the reversible fastening mechanism to firmly secure the peripheral modules and central modules to each other to assemble a vehicle body.

In a preferred embodiment of the present invention, the assembled vehicle body is an airplane, wherein the central module comprises a fuselage (1) and different peripheral modules are attached to said fuselage (1), such as a left-wing module (2), right-wing module (2), a cockpit module (3), a tail module (4), and landing gear modules (5).

In another embodiment of the present invention, the assembled vehicle body is a car, wherein the central module comprises a chassis (8) and different peripheral modules are attached to said chassis, such as a front wheel set module (9), a back wheel set module (10) and a safety halo module (11).

In another embodiment of the present invention, the assembled vehicle body is a boat, wherein the central module comprises a deck (12) and different peripheral modules are attached to said deck (12), such as hull modules (13), a mast module (14).

Each reversible fastening mechanism can be manufactured according to the dimensional characteristics and materials that make up the structures to be joined, such as their dimensions (height, width and thickness).

The main advantages of the object of the present invention are the quick and reversible assembly and disassembly of a vehicle body in a simple and repeatable manner, without compromising the integrity of the final built vehicle body. In addition, the modular vehicle construction system improves the packaging and transport of modular vehicles by providing a quick and precise fixation or release of modular components.

The modular vehicle construction system also facilitates the maintenance and/or repair of the vehicle body parts, by allowing the user to quickly disassemble any damaged module to repair or replace, thus extending the lifespan of a vehicle body, which ultimately contributes to a reduced carbon footprint of the vehicle.

Each vehicle body or final model will result from a specific project and will be built in a modular way. Each module can be shared with other models in the same vehicle family.

The modular vehicle construction system may be applicable in the automotive and other vehicle construction industries, in the aerospace industry, in the naval industry, therefore may have several configurations and is not limited to any of its described embodiments.

### DESCRIPTION OF THE FIGURES

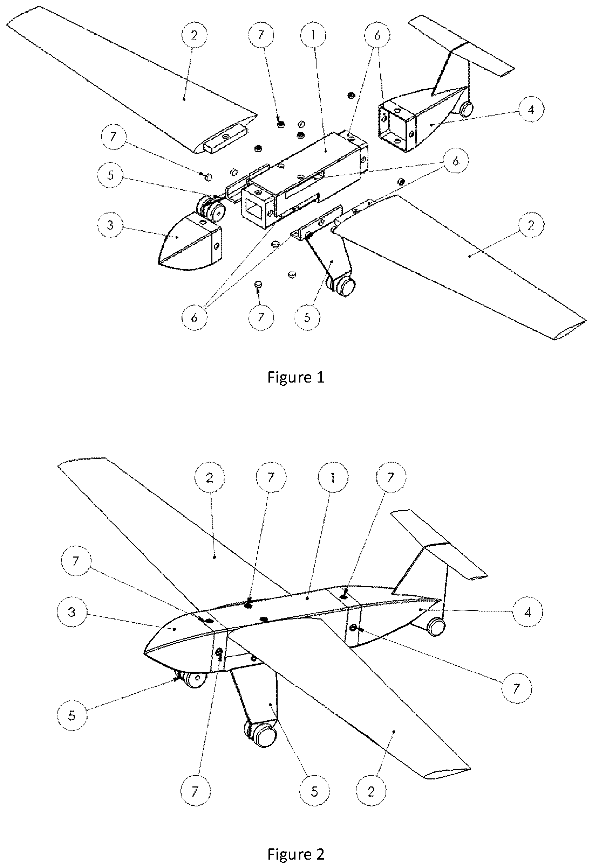

Figure 1 illustrates an exploded view of a preferred embodiment of the modular vehicle construction system, wherein the vehicle body is an airplane.
Figure 2 illustrates a preferred embodiment of the modular vehicle construction system, wherein the vehicle body is an airplane, after assembly.

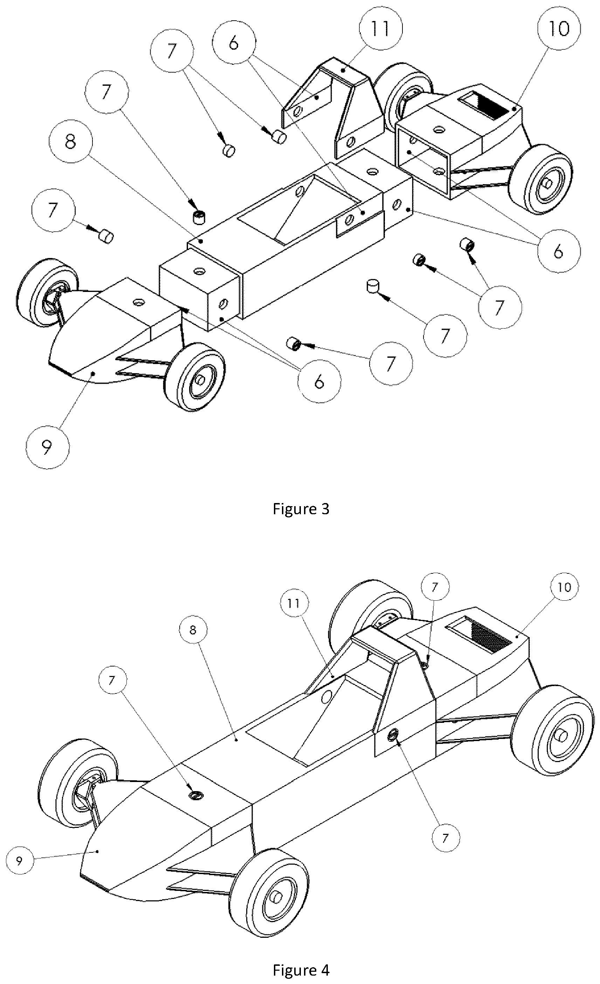

Figure 3 illustrates an exploded view of another embodiment of the modular vehicle construction system, wherein the vehicle body is a car.
Figure 4 illustrates another embodiment of the modular vehicle construction system, wherein the vehicle body is a car, after assembly.

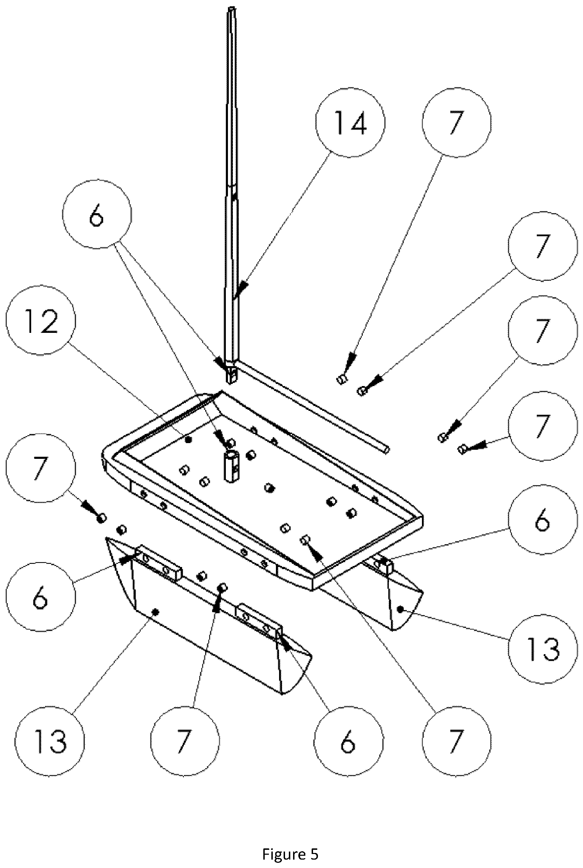

Figure 5 illustrates an exploded view of another embodiment of the modular vehicle construction system, wherein the vehicle body is a boat.

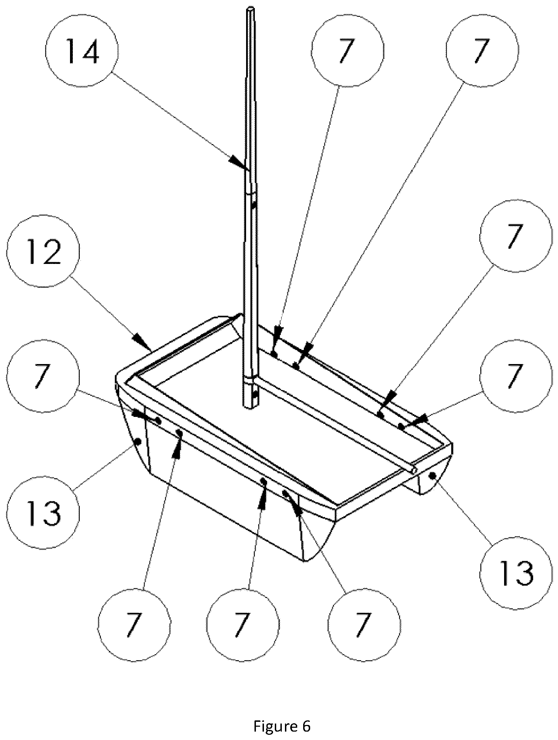

Figure 6 illustrates another embodiment of the modular vehicle construction system, wherein the vehicle body is a boat, after assembly.

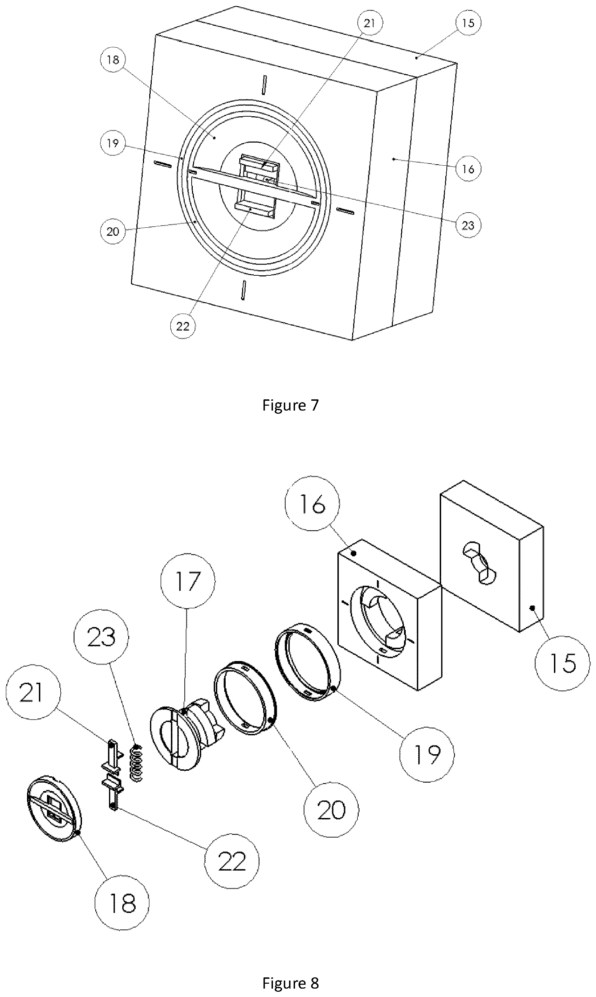

Figure 7 illustrates a preferred embodiment of the reversible fastening mechanism of the modular vehicle construction system, wherein a key (17) is fully inserted through the juxtaposed external element (16) and internal element (15).
Figure 8 illustrates an exploded view of a preferred embodiment of the reversible fastening mechanism of the modular vehicle construction system.

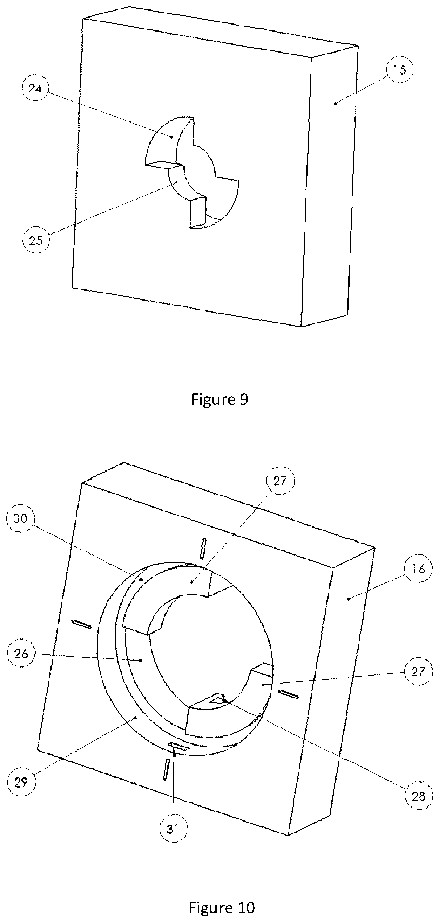

Figure 9 illustrates an embodiment of the internal element (15) of the reversible fastening mechanism, comprising a central cavity (24) and one internal stationary stop (25).
Figure 10 illustrates an embodiment of the external element (16) of the reversible fastening mechanism, comprising a central hole, two external stationary stops (27), one rotational stop (28) attached to one external stationary stop (27), two safety locks (31) positioned in a proximal wall (29) of the central hole. The central hole of the external element (16) of the reversible fastening mechanism also comprises a groove (30) adapted to fit a guard (19), positioned between the proximal wall (29) and the distal wall (26) of the central hole.

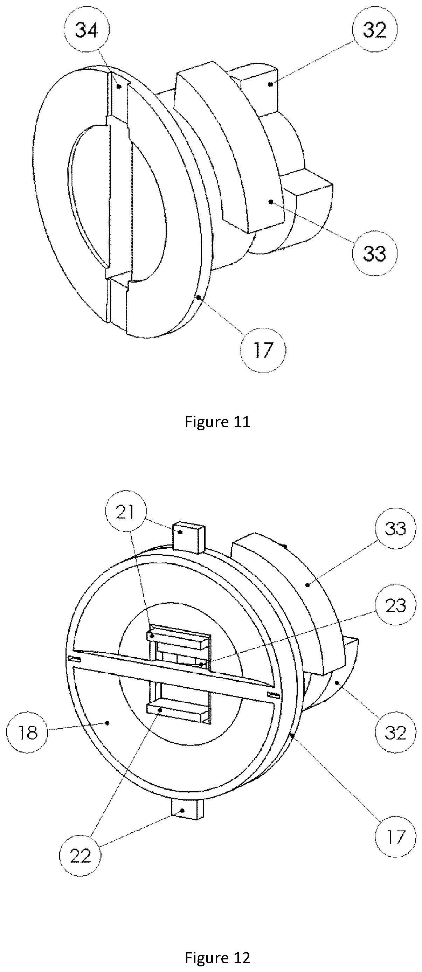

Figure 11 illustrates an embodiment of the key (17) of the reversible fastening mechanism, comprising an internal portion and an external portion, having said internal portion two internal stops (32) and at least one intermediate stop (33). The external portion of the key (17) also comprises a groove (34) adapted to receive the safety pins (21, 22).
Figure 12 illustrates an embodiment of the key (17) of the reversible fastening mechanism in which the external portion of the key (17) comprises two safety pins (21, 22) and a lid (18), being the safety pins (21, 22) fully extended in a relaxed configuration, and said lid further comprising a handle and at least one cavity adapted to receive the safety pin (21, 22).
Figure 13 illustrates an embodiment of the key (17) of the reversible fastening mechanism in which the external portion of the key (17) comprises two safety pins (21, 22) and a lid (18), being the safety pins (21, 22) adopting a lowered position in a compressed configuration attained by the manual compression of the safety pins (21, 22) and of an inner spring (23) connected to the safety pins (21, 22).

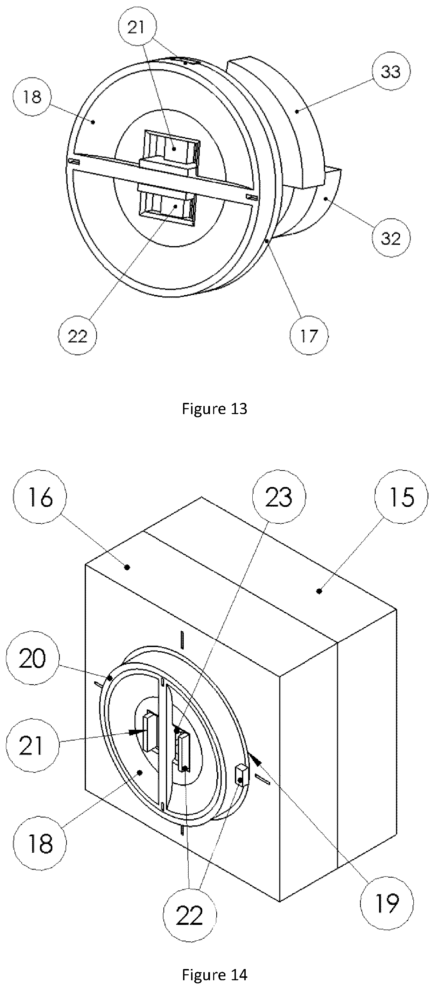

Figure 14 illustrates an assembled and open key (17) configuration of the reversible fastening mechanism, in which in which the internal element (15) is positioned adjacently to the external element (16) so that the central hole of the external element (16) is aligned with the central cavity (24) of the internal element (15) and the key (17) is inserted through the central hole of the external element (16) and not through the central cavity (24) of the internal element (15). The external element (16) comprises a guard (19) adapted to fit the central hole of said external element (16) and the external portion of the key (17) comprises a key guard (20) adapted to fit the guard (19) of the central hole of the external element (16), to facilitate the insertion movement and rotation of the key (17) through the external element (16) and internal element (15).

### DETAILED DESCRIPTION

The more general and advantageous configurations of the present invention are described in the Summary of the Invention. Such configurations are detailed below in accordance with other advantageous and/or preferred embodiments of implementation of the present invention.

In a preferred aspect of the present invention, the external element (16) comprises at least one safety lock (31) and the external portion of the key (17) comprises at least one safety pin (21, 22) adapted to engage with the at least one safety lock (31) of the external element (16). In an advantageous aspect of the present invention, the external portion of the key (17) is configured to allow the displacement of the at least one safety pin (21, 22). The interaction between safety pins (21, 22) and the safety locks (31) allows the user to identify when the reversible fastening mechanism is properly fastened.

In a more preferred embodiment of the present invention, the external portion of key (17) comprises a spring (23) connected to the at least one safety pin (21, 22) so that the spring (23) provides constant pressure upon the engagement between the at least one safety pin (21, 22) and the at least one safety lock (31). In an advantageous aspect of the present invention, the spring (23) allows the safety pins (21, 22) to be fully extended to engage the corresponding safety locks (31), in predetermined positions, to increase the stability and safety of the reversible fastening mechanism. In addition, if there is a need to quickly disrupt the connection between different modules, the safety pins (21, 22) may be quickly disengaged from the safety locks (31) by compressing the spring (23) and at the same time allow repeated actions of extension and contraction of the safety pins (21, 22), thus making the mechanism sufficiently robust to allow repeated fixing and releasing of the connecting modules while minimizing the deterioration of the mechanical elements involved in the connection. The quick fixing and quick releasing action of the reversible fastening mechanism provided by the mechanical interaction between safety pins (21, 22), safety locks (31) and spring (23) facilitates the maintenance and repair operations of the modular vehicle body parts.

In another embodiment of the present invention, the external portion of key (17) comprises at least one groove (34) adapted to receive the safety pins (21, 22), so that the movement of the safety pins (21, 22) is restricted and guided by the at least one groove (34), facilitating engagement of the safety pins (21, 22) with the safety locks (31).

In another embodiment of the present invention, the external portion of the key (17) comprises a lid (18), said lid (18) further comprising a handle and at least one cavity adapted to receive the safety pins (21, 22), so that the safety pins (21, 22) are accessible to the user to be handled during fixing or releasing of the key (17). The lid (18) provides a handle to facilitate the handling movements of the key (17), such as rotation, insertion and pulling movements, and also protects the safety pins (21, 22) inside the external portion of the key (17).

In another embodiment of the present invention, the external element (16) comprises a guard (19) adapted to fit the central hole of said external element (16).

In another embodiment of the present invention, the external portion of the key (17) comprises a key guard (20) adapted to fit the guard (19) of the central hole of the external element (16).

In another embodiment of the present invention, the guard (19) and the key guard (20) comprise at least one hole adapted to receive the at least one safety pin (21, 22).

In an advantageous aspect of the present invention, the guard (19) and key guard (20) facilitate the sliding movement of the key (17) and protects the key (17) and external element (16) from friction.

In another preferred embodiment of the present invention, the external element (16) comprises at least one rotational stop (28) attached to at least one external stationary stop (27), to further secure the connection between the external element (16) and the key (17) and prevent the displacement of the key (17) inside the central hole of the external element (16).

To facilitate the rotation of the key (17), the internal portion and the external portion of the key (17) preferably comprise a cylindrical shaft (7).

The central module, peripheral modules and reversible fastening mechanism may be manufactured using several materials, such as metals, rigid plastics, wood and composite materials.

It is also an object of the present invention a method for assembling a vehicle body comprising the following steps:
i. To connect a central module and a peripheral module together, said central module and said peripheral module are brought close together, wherein one first connection surface (6) of the central modules engages a second connection surface (6) of the peripheral module by a sliding movement or by axial or perpendicular movement;
ii. At least one internal element (15) and at least one external element (16) comprised in each one of the first connection surface (6) and in each one of the second connection surface (6) are brought close together and are aligned;
iii. A key (17) is inserted, being the internal portion of the key (17) inserted fully through the central hole of the external element (16) until the internal portion of the key is fitted inside the central cavity (24) of the internal element (15);
iv. The key (17) is rotated by a maximum of a quarter turn, in a clockwise direction, until the internal stop (32) and the intermediate stop (33) of the key (17) contact with the internal stationary stop (25) of the internal element (15) and with the external stationary stop (27) of the external element (16), respectively, to lock the reversible fastening mechanism;
v. Repeat the steps i - iv to connect additional peripheral modules to the central module;
vi. To release the fixed central module and peripheral module, the key (17) is rotated a maximum of a quarter turn, in a counterclockwise direction;
vii. The internal stop (32) and the intermediate stop (33) of the key (17) are released simultaneously from the internal stationary stop (25) of the internal element (15) and with the external stationary stop (27) of the external element (16), respectively;
viii. The key (17) is removed from the internal element (15) and from the external element (16);
ix. The first connection surface (6) and the second connection surface (6) of the central module and peripheral module, respectively, are separated by a sliding movement or by axial or perpendicular separation;
x. Repeat the steps vi - ix to release additional peripheral modules from the central module.

Alternatively, it is an object of the present invention a method for assembling a vehicle body comprising the following steps:
i. To connect a central module and a peripheral module together, said central module and said peripheral module are brought close together, wherein one first connection surface (6) of the central modules engages a second connection surface (6) of the peripheral module by a sliding movement or by axial or perpendicular movement;
ii. At least one internal element (15) and at least one external element (16) comprised in each one of the first connection surface (6) and in each one of the second connection surface (6) are brought close together and are aligned;
iii. The safety pins (21, 22) of the key (17) are manually pressed and displaced inwards towards the inside of the external portion of the key (17);
iv. The key (17) is inserted, being the internal portion of the key (17) inserted fully through the central hole of the external element (16) until the internal portion of the key is fitted inside the central cavity (24) of the internal element (15);
v. The key (17) is rotated by a maximum of a quarter turn, in a clockwise direction, until the internal stop (32) and the intermediate stop (33) of the key (17) contact with the internal stationary stop (25) of the internal element (15) and with the external stationary stop (27) of the external element (16), respectively,
vi. The safety pins (21, 22) are released and displaced outwards by the spring (23) to engage the safety locks (31) of the external element (16) to lock the reversible fastening mechanism;
vii. Repeat the steps i-vi to connect additional peripheral modules to the central module;
viii. To release the fixed central module and peripheral module, the safety pins (21, 22) of the key are manually pressed and displaced inwards towards the inside of the external portion of the key;
ix. The key (17) is rotated a maximum of a quarter turn, in a counterclockwise direction;
x. The internal stop (32) and the intermediate stop (33) of the key (17) are released simultaneously from the internal stationary stop (25) of the internal element (15) and with the external stationary stop (27) of the external element (16), respectively;
xi. The key (17) is removed from the internal element (15) and from the external element (16);
xii. The safety pins (21, 22) are released and displaced outwards by the spring (23);
xiii. The first connection surface (6) and the second connection surface (6) of the central module and peripheral module, respectively, are separated by a sliding movement or by axial or perpendicular separation;
xiv. Repeat the steps viii - xiii to release additional peripheral modules from the central module.

Of course, the preferred embodiments shown above are combinable, in different possible configurations, being the present invention not limited to the embodiments previously described.

## Claims

1. A modular vehicle construction system comprising a central module and at least one peripheral module, being the central module and the at least one peripheral module connected to each other by a reversible fastening mechanism to assemble a vehicle body, **characterized in that**:
- the reversible fastening mechanism comprises an internal element (15), an external element (16) and a key (17); said internal element (15) comprising a central cavity (24) having at least one internal stationary stop (25) positioned within said cavity; said external element (16) comprising a central hole and at least one external stationary stop (27) positioned within said central hole; said key (17) comprising an internal portion and an external portion, having said internal portion at least one internal stop (32) and at least one intermediate stop (33), in which the internal element (15) is positioned adjacently to the external element (16) so that the central hole of the external element (16) is aligned with the central cavity (24) of the internal element (15); the internal portion of the key (17) is configured to be inserted through the central hole of the external element (16) and through the central cavity (24) of the internal element (15); the external portion of the key (17) is configured to allow the rotation movement of the key (17) so that the at least one internal stop (32) of the key (17) engages the at least one internal stationary stop (25) of the internal element (15) and at least one intermediate stop (33) of the key (17) engages the at least one external stationary stop (27) of the external element (16);
- the central module comprises at least one first connection surface (6) adapted to engage one second connection surface (6) of the at least one peripheral module, in which the at least one first connection surface (6) comprises at least one selected from the group: internal element (15), external element (16) and combinations thereof; and
- the at least one peripheral module comprises at least one second connection surface (6) adapted to engage one first connection surface (6) of the central module, in which the at least one second connection surface (6) comprises at least one selected from the group: internal element (15), external element (16) and combinations thereof.

2. A modular vehicle construction system according to claim 1 wherein the external element (16) comprises at least one safety lock (31) and the external portion of the key (17) comprises at least one safety pin (21, 22) adapted to engage with the at least one safety lock (31) of the external element (16); being the external portion of the key (17) configured to allow the displacement of the at least one safety pin (21, 22).

3. A modular vehicle construction system according to claim 2 wherein the external portion of key (17) comprises a spring (23) connected to the at least one safety pin (21, 22) so that the spring (23) provides constant pressure upon the engagement between the at least one safety pin (21, 22) and the at least one safety lock (31).

4. A modular vehicle construction system according to any of the previous claims wherein the external portion of key (17) comprises at least one groove (34) adapted to receive the safety pin (21, 22).

5. A modular vehicle construction system according to any of the previous claims wherein the external portion of the key (17) comprises a lid (18), said lid (18) further comprising a handle and at least one cavity adapted to receive the safety pin (21, 22).

6. A modular vehicle construction system according to any of the previous claims wherein the external element (16) comprises a guard (19) adapted to fit the central hole of said external element (16).

7. A modular vehicle construction system according to claim 6 wherein the external portion of the key (17) comprises a key guard (20) adapted to fit the guard (19) of the central hole of the external element (16).

8. A modular vehicle construction system according to claims 6 - 7 wherein the guard (19) and the key guard (20) comprise at least one hole adapted to receive the at least one safety pin (21, 22).

9. A modular vehicle construction system according to any of the previous claims wherein the external element (16) comprises at least one rotational stop (28) attached to at least one external stationary stop (27).

10. A modular vehicle construction system according to any of the previous claims wherein the internal portion and the external portion of the key (17) comprise a cylindrical shaft (7).

11. A modular vehicle construction system according to any of the previous claims wherein the central module, peripheral modules and reversible fastening mechanism are made of at least one selected material of the group: metal, rigid plastic, wood, composite materials.

12. A method for assembling a vehicle body according to the claims 1 - 11 comprising the following steps:
i. To connect a central module and a peripheral module together, said central module and said peripheral module are brought close together, wherein one first connection surface (6) of the central modules engages a second connection surface (6) of the peripheral module by a sliding movement or by axial or perpendicular movement;
ii. At least one internal element (15) and at least one external element (16) comprised in each one of the first connection surface (6) and in each one of the second connection surface (6) are brought close together and are aligned;
iii. A key (17) is inserted, being the internal portion of the key (17) inserted fully through the central hole of the external element (16) until the internal portion of the key is fitted inside the central cavity (24) of the internal element (15);
iv. The key (17) is rotated by a maximum of a quarter turn, in a clockwise direction, until the internal stop (32) and the intermediate stop (33) of the key (17) contact with the internal stationary stop (25) of the internal element (15) and with the external stationary stop (27) of the external element (16), respectively, to lock the reversible fastening mechanism;
v. Repeat the steps i - iv to connect additional peripheral modules to the central module;
vi. To release the fixed central module and peripheral module, the key (17) is rotated a maximum of a quarter turn, in a counterclockwise direction;
vii. The internal stop (32) and the intermediate stop (33) of the key (17) are released simultaneously from the internal stationary stop (25) of the internal element (15) and with the external stationary stop (27) of the external element (16), respectively;
viii. The key (17) is removed from the internal element (15) and from the external element (16);
ix. The first connection surface (6) and the second connection surface (6) of the central module and peripheral module, respectively, are separated by a sliding movement or by axial or perpendicular separation;
x. Repeat the steps vi - ix to release additional peripheral modules from the central module.

13. A method for assembling a vehicle body according to the claims 2 - 11 comprising the following steps:
i. To connect a central module and a peripheral module together, said central module and said peripheral module are brought close together, wherein one first connection surface (6) of the central modules engages a second connection surface (6) of the peripheral module by a sliding movement or by axial or perpendicular movement;
ii. At least one internal element (15) and at least one external element (16) comprised in each one of the first connection surface (6) and in each one of the second connection surface (6) are brought close together and are aligned;
iii. The safety pins (21, 22) of the key (17) are manually pressed and displaced inwards towards the inside of the external portion of the key (17);
iv. The key (17) is inserted, being the internal portion of the key (17) inserted fully through the central hole of the external element (16) until the internal portion of the key (17) is fitted inside the central cavity (24) of the internal element (15);
v. The key (17) is rotated by a maximum of a quarter turn, in a clockwise direction, until the internal stop (32) and the intermediate stop (33) of the key (17) contact with the internal stationary stop (25) of the internal element (15) and with the external stationary stop (27) of the external element (16), respectively,
vi. The safety pins (21, 22) are released and displaced outwards by the spring (23) to engage the safety locks (31) of the external element (16) to lock the reversible fastening mechanism;
vii. Repeat the steps i-vi to connect additional peripheral modules to the central module;
viii. To release the fixed central module and peripheral module, the safety pins (21, 22) of the key are manually pressed and displaced inwards towards the inside of the external portion of the key;
ix. The key (17) is rotated a maximum of a quarter turn, in a counterclockwise direction;
x. The internal stop (32) and the intermediate stop (33) of the key (17) are released simultaneously from the internal stationary stop (25) of the internal element (15) and with the external stationary stop (27) of the external element (16), respectively;
xi. The key (17) is removed from the internal element (15) and from the external element (16);
xii. The safety pins (21, 22) are released and displaced outwards by the spring (23);
xiii. The first connection surface (6) and the second connection surface (6) of the central module and peripheral module, respectively, are separated by a sliding movement or by axial or perpendicular separation;
xiv. Repeat the steps viii - xiii to release additional peripheral modules from the central module.

## Patentansprüche

1. Modulares Fahrzeugbausystem mit einem Zentralmodul und mindestens einem Peripheriemodul, wobei das Zentralmodul und das mindestens eine Peripheriemodul durch einen reversiblen Befestigungsmechanismus miteinander verbunden sind, um eine Fahrzeugkarosserie zusammenzubauen, **dadurch gekennzeichnet, dass**:
- der reversible Befestigungsmechanismus ein inneres Element (15), ein äußeres Element (16) und einen Schlüssel (17) umfasst; wobei das innere Element (15) einen zentralen Hohlraum (24) mit mindestens einem inneren stationären Anschlag (25) umfasst, der in dem Hohlraum angeordnet ist; wobei das äußere Element (16) ein zentrales Loch und mindestens einen äußeren stationären Anschlag (27) umfasst, der in dem zentralen Loch angeordnet ist; der Schlüssel (17) einen inneren Abschnitt und einen äußeren Abschnitt umfasst, wobei der innere Abschnitt mindestens einen inneren Anschlag (32) und mindestens einen Zwischenanschlag (33) aufweist, wobei das innere Element (15) an das äußere Element (16) angrenzend positioniert ist, so dass das zentrale Loch des äußeren Elements (16) mit dem zentralen Hohlraum (24) des inneren Elements (15) ausgerichtet ist; der innere Abschnitt des Schlüssels (17) ist so konfiguriert, dass er durch das zentrale Loch des äußeren Elements (16) und durch den zentralen Hohlraum (24) des inneren Elements (15) eingeführt werden kann; der äußere Abschnitt des Schlüssels (17) ist so konfiguriert, dass er die Drehbewegung des Schlüssels (17) ermöglicht, so dass der mindestens eine innere Anschlag (32) des Schlüssels (17) in den mindestens einen inneren stationären Anschlag (25) des inneren Elements (15) eingreift und mindestens ein Zwischenanschlag (33) des Schlüssels (17) in den mindestens einen äußeren stationären Anschlag (27) des äußeren Elements (16) eingreift;
- das Zentralmodul mindestens eine erste Verbindungsfläche (6) umfasst, die geeignet ist, mit einer zweiten Verbindungsfläche (6) des mindestens einen Peripheriemoduls in Eingriff zu kommen, wobei die mindestens eine erste Verbindungsfläche (6) mindestens eines aus der Gruppe umfasst: inneres Element (15), äußeres Element (16) und Kombinationen davon; und
- das mindestens eine Peripheriemodul mindestens eine zweite Verbindungsfläche (6) umfasst, die geeignet ist, mit einer ersten Verbindungsfläche (6) des Zentralmoduls in Eingriff zu kommen, wobei die mindestens eine zweite Verbindungsfläche (6) mindestens eines aus der Gruppe umfasst: inneres Element (15), äußeres Element (16) und Kombinationen davon.

2. Modulares Fahrzeugbausystem nach Anspruch 1, wobei das äußere Element (16) mindestens ein Sicherheitsschloss (31) umfasst und der äußere Abschnitt des Schlüssels (17) mindestens einen Sicherheitsstift (21, 22) umfasst, der so angepasst ist, dass er mit dem mindestens einen Sicherheitsschloss (31) des äußeren Elements (16) in Eingriff kommt; wobei der äußere Abschnitt des Schlüssels (17) so konfiguriert ist, dass er die Verschiebung des mindestens einen Sicherheitsstifts (21, 22) ermöglicht.

3. Modulares Fahrzeugbausystem nach Anspruch 2, wobei der äußere Abschnitt des Schlüssels (17) eine Feder (23) umfasst, die mit dem mindestens einen Sicherheitsstift (21, 22) verbunden ist, so dass die Feder (23) einen konstanten Druck auf den Eingriff zwischen dem mindestens einen Sicherheitsstift (21, 22) und dem mindestens einen Sicherheitsschloss (31) ausübt.

4. Modulares Fahrzeugbausystem nach einem der vorhergehenden Ansprüche, wobei der äußere Abschnitt des Schlüssels (17) mindestens eine Nut (34) aufweist, die zur Aufnahme des Sicherheitsstifts (21, 22) geeignet ist.

5. Modulares Fahrzeugbausystem nach einem der vorhergehenden Ansprüche, wobei der äußere Abschnitt des Schlüssels (17) einen Deckel (18) umfasst, wobei der Deckel (18) ferner einen Griff und mindestens einen Hohlraum umfasst, der zur Aufnahme des Sicherheitsstifts (21, 22) geeignet ist.

6. Modulares Fahrzeugbausystem nach einem der vorhergehenden Ansprüche, wobei das äußere Element (16) einen Schutz (19) umfasst, der so angepasst ist, dass er in das zentrale Loch des äußeren Elements (16) passt.

7. Modulares Fahrzeugbausystem nach Anspruch 6, wobei der äußere Abschnitt des Schlüssels (17) einen Schlüsselschutz (20) umfasst, der so angepasst ist, dass er in den Schutz (19) des zentralen Lochs des äußeren Elements (16) passt.

8. Modulares Fahrzeugbausystem nach Ansprüche 6-7, wobei der Schutz (19) und der Schlüsselschutz (20) mindestens ein Loch aufweisen, das zur Aufnahme des mindestens einen Sicherheitsstifts (21, 22) geeignet ist.

9. Modulares Fahrzeugbausystem nach einem der vorhergehenden Ansprüche, wobei das äußere Element (16) mindestens einen Drehanschlag (28) umfasst, der an mindestens einem äußeren stationären Anschlag (27) befestigt ist.

10. Modulares Fahrzeugbausystem nach einem der vorhergehenden Ansprüche, wobei der innere Abschnitt und der äußere Abschnitt des Schlüssels (17) einen zylindrischen Schaft (7) umfassen.

11. Modulares Fahrzeugbausystem nach einem der vorhergehenden Ansprüche, wobei das Zentralmodul, die Peripheriemodule und der reversible Befestigungsmechanismus aus mindestens einem ausgewählten Material aus der Gruppe Metall, Hartkunststoff, Holz, Verbundwerkstoffe hergestellt sind.

12. Verfahren zum Zusammenbau einer Fahrzeugkarosserie nach Ansprüche 1-11, umfassend die folgenden Schritte:
i. Um ein Zentralmoduls und ein Peripheriemoduls miteinander zu verbinden, werden das Zentralmodul und das Peripheriemodul einander angenähert, wobei eine erste Verbindungsfläche (6) des Zentralmoduls durch eine Gleitbewegung oder durch axiale oder senkrechte Bewegung mit einer zweiten Verbindungsfläche (6) des Peripheriemoduls in Eingriff kommt;
ii. Mindestens ein inneres Element (15) und mindestens ein äußeres Element (16), die in jeder der ersten Verbindungsfläche (6) und in jeder der zweiten Verbindungsfläche (6) enthalten sind, werden nahe aneinander gebracht und ausgerichtet;
iii. Ein Schlüssel (17) wird eingeführt, wobei der innere Abschnitt des Schlüssels (17) vollständig durch das zentrale Loch des äußeren Elements (16) eingeführt wird, bis der innere Abschnitt des Schlüssels in den zentralen Hohlraum (24) des inneren Elements (15) eingepasst ist;
iv. Der Schlüssel (17) wird um maximal eine Vierteldrehung im Uhrzeigersinn gedreht, bis der innere Anschlag (32) und der Zwischenanschlag (33) des Schlüssels (17) mit dem inneren stationären Anschlag (25) des inneren Elements (15) bzw. mit dem äußeren stationären Anschlag (27) des äußeren Elements (16) in Berührung kommen, um den reversiblen Befestigungsmechanismus zu verriegeln;
v. Wiederholen Sie die Schritte i - iv, um weitere Peripheriemodule mit dem Zentralmodul zu verbinden;
vi. Zum Lösen des festen Zentralmoduls und des Peripheriemoduls wird der Schlüssel (17) um maximal eine Vierteldrehung gegen den Uhrzeigersinn gedreht;
vii. Der innere Anschlag (32) und der Zwischenanschlag (33) des Schlüssels (17) werden gleichzeitig vom inneren stationären Anschlag (25) des inneren Elements (15) bzw. mit dem äußeren stationären Anschlag (27) des äußeren Elements (16) gelöst;
viii. Der Schlüssel (17) wird aus dem inneren Element (15) und aus dem äußeren Element (16) entfernt;
ix. Die erste Verbindungsfläche (6) und die zweite Verbindungsfläche (6) des Zentralmoduls bzw. des Peripheriemoduls werden durch eine Gleitbewegung oder durch axiale oder senkrechte Trennung getrennt;
x. Wiederholen Sie die Schritte vi - ix, um weitere Peripheriemodule von dem Zentralmodul zu lösen.

13. Verfahren zum Zusammenbau einer Fahrzeugkarosserie nach Ansprüche 2-11, umfassend die folgenden Schritte:
i. Um ein Zentralmoduls und ein Peripheriemoduls miteinander zu verbinden, werden das Zentralmodul und das Peripheriemodul einander angenähert, wobei eine erste Verbindungsfläche (6) des Zentralmoduls durch eine Gleitbewegung oder durch axiale oder senkrechte Bewegung mit einer zweiten Verbindungsfläche (6) des Peripheriemoduls in Eingriff kommt;
ii. Mindestens ein inneres Element (15) und mindestens ein äußeres Element (16), die in jeder der ersten Verbindungsfläche (6) und in jeder der zweiten Verbindungsfläche (6) enthalten sind, werden nahe aneinander gebracht und ausgerichtet;
iii. Die Sicherheitsstifte (21, 22) des Schlüssels (17) werden von Hand gedrückt und nach innen in Richtung der Innenseite des äußeren Abschnitts des Schlüssels (17) verschoben;
iv. Der Schlüssel (17) wird eingeführt, wobei der innere Abschnitt des Schlüssels (17) vollständig durch das zentrale Loch des äußeren Elements (16) eingeführt wird, bis der innere Abschnitt des Schlüssels (17) in den zentralen Hohlraum (24) des inneren Elements (15) eingepasst ist;
v. Der Schlüssel (17) wird um maximal eine Vierteldrehung im Uhrzeigersinn gedreht, bis der innere Anschlag (32) und der Zwischenanschlag (33) des Schlüssels (17) mit dem inneren stationären Anschlag (25) des inneren Elements (15) bzw. mit dem äußeren stationären Anschlag (27) des äußeren Elements (16) in Berührung kommen;
vi. Die Sicherheitsstifte (21, 22) werden gelöst und durch die Feder (23) nach außen verschoben, um in die Sicherheitsschlösser (31) des äußeren Elements (16) einzugreifen und den reversiblen Befestigungsmechanismus zu verriegeln;
vii. Wiederholen Sie die Schritte i - vi, um weitere Peripheriemodule mit dem Zentralmodul zu verbinden;
viii. Zum Lösen des festen Zentralmoduls und des Peripheriemoduls werden die Sicherheitsstifte (21, 22) des Schlüssels von Hand gedrückt und nach innen in Richtung der Innenseite des äußeren Abschnitts des Schlüssels verschoben;
ix. Der Schlüssel (17) wird um maximal eine Vierteldrehung gegen den Uhrzeigersinn gedreht;
x. Der innere Anschlag (32) und der Zwischenanschlag (33) des Schlüssels (17) werden gleichzeitig vom inneren stationären Anschlag (25) des inneren Elements (15) bzw. mit dem äußeren stationären Anschlag (27) des äußeren Elements (16) gelöst;
xi. Der Schlüssel (17) wird aus dem inneren Element (15) und aus dem äußeren Element (16) entfernt;
xii. Die Sicherheitsstifte (21, 22) werden gelöst und durch die Feder (23) nach außen verschoben;
xiii. Die erste Verbindungsfläche (6) und die zweite Verbindungsfläche (6) des Zentralmoduls bzw. des Peripheriemoduls werden durch eine Gleitbewegung oder durch axiale oder senkrechte Trennung getrennt;
xiv. Wiederholen Sie die Schritte viii - xiii, um weitere Peripheriemodule von dem Zentralmodul zu lösen.

## Revendications

1. Système de construction modulaire de véhicule comprenant un module central et au moins un module périphérique, le module central et le au moins un module périphérique étant reliés l'un à l'autre par un mécanisme de fixation réversible afin d'assembler une carrosserie de véhicule, **caractérisé en ce que** :
- le mécanisme de fixation réversible comprend un élément interne (15), un élément externe (16) et une clé (17) ; ledit élément interne (15) comprenant une cavité centrale (24) comportant au moins une butée fixe interne (25) positionnée à l'intérieur de ladite cavité ; ledit élément externe (16) comprenant un trou central et au moins une butée fixe externe (27) positionnée à l'intérieur dudit trou central ; ladite clé (17) comprenant une partie interne et une partie externe, ladite partie interne comportant au moins une butée interne (32) et au moins une butée intermédiaire (33), dans lequel l'élément interne (15) est positionné de manière adjacente à l'élément externe (16) de sorte que le trou central de l'élément externe (16) soit aligné avec la cavité centrale (24) de l'élément interne (15) ; la partie interne de la clé (17) étant configurée pour être insérée à travers le trou central de l'élément externe (16) et à travers la cavité centrale (24) de l'élément interne (15) ; la partie externe de la clé (17) étant configurée pour permettre le mouvement de rotation de la clé (17) de telle sorte qu'au moins une butée interne (32) de la clé (17) s'engage dans au moins une butée fixe interne (25) de l'élément interne (15) et qu'au moins une butée intermédiaire (33) de la clé (17) s'engage dans au moins une butée fixe externe (27) de l'élément externe (16) ;
- le module central comprend au moins une première surface de connexion (6) adaptée pour s'engager avec une deuxième surface de connexion (6) du au moins un module périphérique, dans lequel la au moins une première surface de connexion (6) comprend au moins un élément sélectionné parmi le groupe suivant : élément interne (15), élément externe (16) et combinaisons de ceux-ci ; et
- le au moins un module périphérique comprend au moins une deuxième surface de connexion (6) adaptée pour s'engager avec une première surface de connexion (6) du module central, dans lequel la au moins une deuxième surface de connexion (6) comprend au moins un élément sélectionné parmi le groupe suivant : élément interne (15), élément externe (16) et combinaisons de ceux-ci.

2. Système de construction modulaire de véhicule selon la revendication 1, dans lequel l'élément externe (16) comprend au moins un blocage de sécurité (31) et la partie externe de la clé (17) comprend au moins une goupille de sécurité (21, 22) adaptée pour s'engager avec le au moins un blocage de sécurité (31) de l'élément externe (16) ; la partie externe de la clé (17) étant configurée pour permettre le déplacement de la au moins une goupille de sécurité (21, 22).

3. Système de construction modulaire de véhicule selon la revendication 2, dans lequel la partie externe de la clé (17) comprend un ressort (23) relié à au moins une goupille de sécurité (21, 22) de telle sorte que le ressort (23) exerce une pression constante sur l'engagement entre la au moins une goupille de sécurité (21, 22) et le au moins un blocage de sécurité (31).

4. Système de construction modulaire de véhicule selon l'une quelconque des revendications précédentes, dans lequel la partie externe de la clé (17) comprend au moins une rainure (34) adaptée pour recevoir la goupille de sécurité (21, 22).

5. Système de construction modulaire de véhicule selon l'une quelconque des revendications précédentes, dans lequel la partie externe de la clé (17) comprend un couvercle (18), ledit couvercle (18) comprenant en outre une poignée et au moins une cavité adaptée pour recevoir la goupille de sécurité (21, 22).

6. Système de construction modulaire de véhicule selon l'une quelconque des revendications précédentes, dans lequel l'élément externe (16) comprend une protection (19) adaptée pour s'ajuster au trou central dudit élément externe (16).

7. Système de construction modulaire de véhicule selon la revendication 6, dans lequel la partie externe de la clé (17) comprend un protège-clé (20) adapté pour s'ajuster à la protection (19) du trou central de l'élément externe (16).

8. Système de construction modulaire de véhicule selon les revendications 6 à 7, dans lequel la protection (19) et le protège-clé (20) comprennent au moins un trou adapté pour recevoir la au moins une goupille de sécurité (21, 22).

9. Système de construction modulaire de véhicule selon l'une quelconque des revendications précédentes, dans lequel l'élément externe (16) comprend au moins une butée rotative (28) fixée à au moins une butée fixe externe (27).

10. Système de construction modulaire de véhicule selon l'une quelconque des revendications précédentes, dans lequel la partie interne et la partie externe de la clé (17) comprennent un axe cylindrique (7).

11. Système de construction modulaire de véhicule selon l'une quelconque des revendications précédentes, dans lequel le module central, les modules périphériques et le mécanisme de fixation réversible sont fabriqués à partir d'au moins un matériau sélectionné parmi le groupe suivant : métal, plastique rigide, bois, matériaux composites.

12. Procédé d'assemblage d'une carrosserie de véhicule selon les revendications 1 à 11, comprenant les étapes suivantes :
i. Pour connecter un module central et un module périphérique ensemble, ledit module central et ledit module périphérique sont rapprochés l'un de l'autre, où une première surface de connexion (6) des modules centraux s'engage avec une deuxième surface de connexion (6) du module périphérique par un mouvement coulissant ou par un mouvement axial ou perpendiculaire ;
ii. Au moins un élément interne (15) et au moins un élément externe (16) compris dans chacune des premières surfaces de connexion (6) et dans chacune des deuxièmes surfaces de connexion (6) sont rapprochés et alignés ;
iii. Une clé (17) est insérée, la partie interne de la clé (17) étant insérée complètement à travers le trou central de l'élément externe (16) jusqu'à ce que la partie interne de la clé soit ajustée à l'intérieur de la cavité centrale (24) de l'élément interne (15) ;
iv. La clé (17) est tournée d'un quart de tour maximum, dans le sens des aiguilles d'une montre, jusqu'à ce que la butée interne (32) et la butée intermédiaire (33) de la clé (17) entrent en contact avec la butée fixe interne (25) de l'élément interne (15) et avec la butée fixe externe (27) de l'élément externe (16), respectivement, afin de bloquer le mécanisme de fixation réversible ;
v. Répéter les étapes i à iv pour connecter des modules périphériques additionnels au module central ;
vi. Pour libérer le module central fixe et le module périphérique, la clé (17) est tournée d'un quart de tour maximum, dans le sens inverse des aiguilles d'une montre ;
vii. La butée interne (32) et la butée intermédiaire (33) de la clé (17) sont libérées simultanément de la butée fixe interne (25) de l'élément interne (15) et avec la butée fixe externe (27) de l'élément externe (16), respectivement ;
viii. La clé (17) est retirée de l'élément interne (15) et de l'élément externe (16) ;
ix. La première surface de connexion (6) et la deuxième surface de connexion (6) du module central et du module périphérique, respectivement, sont séparées par un mouvement coulissant ou par une séparation axiale ou perpendiculaire ;
x. Répéter les étapes vi à ix pour libérer des modules périphériques additionnels du module central.

13. Procédé d'assemblage d'une carrosserie de véhicule selon les revendications 2 à 11, comprenant les étapes suivantes :
i. Pour connecter un module central et un module périphérique ensemble, ledit module central et ledit module périphérique sont rapprochés l'un de l'autre, où une première surface de connexion (6) des modules centraux s'engage avec une deuxième surface de connexion (6) du module périphérique par un mouvement coulissant ou par un mouvement axial ou perpendiculaire ;
ii. Au moins un élément interne (15) et au moins un élément externe (16) compris dans chacune des premières surfaces de connexion (6) et dans chacune des deuxièmes surfaces de connexion (6) sont rapprochés et alignés ;
iii. Les goupilles de sécurité (21, 22) de la clé (17) sont enfoncées manuellement et déplacées vers l'intérieur, en direction de la partie externe de la clé (17) ;
iv. La clé (17) est insérée, la partie interne de la clé (17) étant insérée complètement à travers le trou central de l'élément externe (16) jusqu'à ce que la partie interne de la clé soit ajustée à l'intérieur de la cavité centrale (24) de l'élément interne (15) ;
v. La clé (17) est tournée d'un quart de tour maximum, dans le sens des aiguilles d'une montre, jusqu'à ce que la butée interne (32) et la butée intermédiaire (33) de la clé (17) entrent en contact avec la butée fixe interne (25) de l'élément interne (15) et avec la butée fixe externe (27) de l'élément externe (16), respectivement ;
vi. Les goupilles de sécurité (21, 22) sont relâchées et déplacées vers l'extérieur par le ressort (23) pour s'engager dans les blocages de sécurité (31) de l'élément externe (16) afin de bloquer le mécanisme de fixation réversible ;
vii. Répéter les étapes i à vi pour connecter des modules périphériques additionnels au module central ;
viii. Pour libérer le module central fixe et le module périphérique, les goupilles de sécurité (21, 22) de la clé sont enfoncées manuellement et déplacées vers l'intérieur, en direction de la partie externe de la clé ;
ix. La clé (17) est tournée d'un quart de tour maximum, dans le sens inverse des aiguilles d'une montre ;
x. La butée interne (32) et la butée intermédiaire (33) de la clé (17) sont libérées simultanément de la butée fixe interne (25) de l'élément interne (15) et avec la butée fixe externe (27) de l'élément externe (16), respectivement ;
xi. La clé (17) est retirée de l'élément interne (15) et de l'élément externe (16) ;
xii. Les goupilles de sécurité (21, 22) sont libérées et déplacées vers l'extérieur par le ressort (23) ;
xiii. La première surface de connexion (6) et la deuxième surface de connexion (6) du module central et du module périphérique, respectivement, sont séparées par un mouvement coulissant ou par une séparation axiale ou perpendiculaire ;
xiv. Répéter les étapes viii à xiii pour libérer des modules périphériques additionnels du module central.
